# EUROPÄISCHE PATENTSCHRIFT

(11) **EP 3 074 675 B1**
(45) Veröffentlichungstag und Bekanntmachung des Hinweises auf die Patenterteilung: **17.02.2021**
(21) Anmeldenummer: 14815593.0
(22) Anmeldetag: 27.11.2014
(51) Int. Cl.: F16K 27/02, F16K 31/06, F16K 27/04

(54) **ELEKTROMAGNETISCH GESTEUERTES PROPORTIONALVENTIL**
ELECTROMAGNETICALLY CONTROLLED PROPORTIONAL VALVE
VANNE PROPORTIONNELLE COMMANDÉE DE MANIÈRE ÉLECTROMAGNÉTIQUE

(30) Priorität: 28.11.2013 AT 507822013
(43) Veröffentlichungstag der Anmeldung: 05.10.2016
(73) Patentinhaber: MELECS EWS GmbH & Co KG, 7011 Siegendorf (AT)
(72) Erfinder: HELLINGER, Leopold, A-3710 Ziersdorf (AT); NEUMANN, Gerhard, A-3231 St. Margarethen (AT); GEISZLER, Franz, A-7023 Stöttera (AT); KOCH, Armin, A-6807 Feldkirch (AT)
(74) Vertreter: Maier, Daniel Oliver
(86) Internationale Anmeldenummer: PCT/EP2014/075730
(87) Internationale Veröffentlichungsnummer: WO 2015/078942

(56) Entgegenhaltungen:
- EP-A2- 0 376 894
- WO-A1-2006/038105
- WO-A1-2013/127969
- JP-A- S58 200 873
- US-A1- 2003 131 896
- US-A1- 2006 006 354
- US-A1- 2009 183 777

## Beschreibung

Die Erfindung betrifft ein elektromagnetisch gesteuertes Proportionalventil.

Bei elektrohydraulischen Steuerungssystemen für Automatikgetriebe im Personen- und Lastkraftwagen-Bereich wird eine hydraulische Getriebesteuerung mit einer elektronischen Getriebesteuerung verknüpft.

Dabei ist das elektronische Getriebesteuergerät bei moderneren Generationen über einen CAN-Bus mit anderen elektronischen Steuergeräten, wie zum Beispiel einem Motorsteuergerät oder einem Steuergerät für die Stabilität verbunden.

Ein wesentliches Element der elektrohydraulischen Steuerungssysteme sind elektromagnetisch gesteuerte Proportionalventile als Schnittstelle zwischen elektrischer Steuerung und Hydraulik.

Die richtige Ansteuerung von proportionalen Ventilen ist für den Anwender allerdings nur sehr aufwändig zu ermitteln. Jedes Ventil muss mit einem sogenannten dither beaufschlagt werden, um zu gewährleisten, dass das Ventil immer im Zustand der Gleitreibung bleibt.

Die Gleitreibung ist notwendig, um die Hysterese möglichst gering zu halten. Der dither soll aber möglichst auf das minimal nötige Mass (Strom und Temperatur abhängig) begrenzt werden, da dither immer Leckverluste und damit mehr Pumpenergie bedeutet

Im Zuge der Endjustierung des Ventils beim Ventilhersteller wird das Ventil weiterhin mechanisch so getrimmt, dass sich eine möglichst lineare Steuerkennlinie ergibt. Dieser Vorgang ist sehr zeitaufwändig.

Die Steuerkennlinie ist darüber hinaus temperaturabhängig. Bei herkömmlichen Anwendungen wird daher die Linearität der Steuerkennlinie durch einen Endabgleich erzielt, die Hysterese und die Temperaturabhängigkeit durch aufwändige Steuerungsmaßnahmen minimiert wobei die Kompensation der Temperaturabhängigkeit eine Messung z.B. der Öltemperatur und ein thermisches Modell des Ventils erfordert.

Der Erfindung liegt die Aufgabe zugrunde, den genannten Stand der Technik (z.B. EP 0 376 894 A2, US 2006/006354 A1 oder US 2009/183777 A1) weiterzuentwickeln.

Erfindungsgemäß geschieht dies mit einem Proportionalventil gemäß Anspruch 1.

Vorteilhafte Ausgestaltungen ergeben sich aus den Unteransprüchen.

Die Erfindung wird anhand eines in den Figuren dargestellten Ausführungsbeispieles näher erläutert.

Es zeigen beispielhaft:

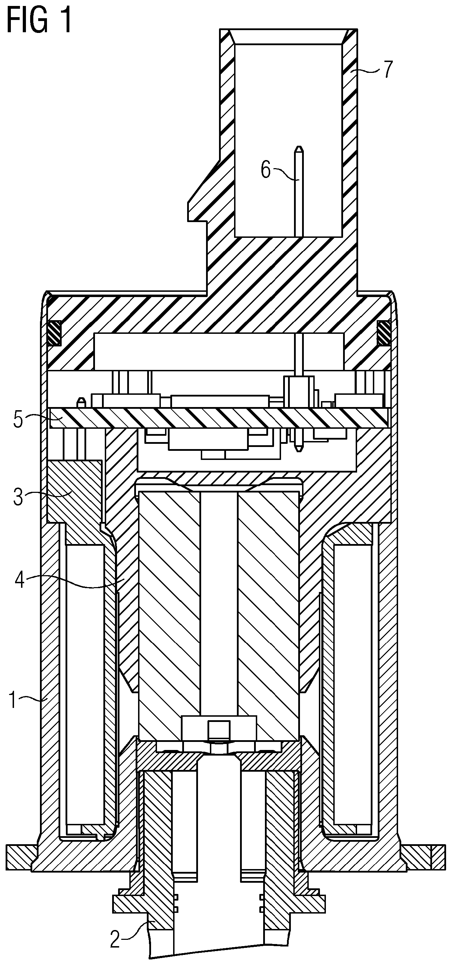

Fig.1 einen Querschnitt durch ein erfindungsgemäßes Ventil,

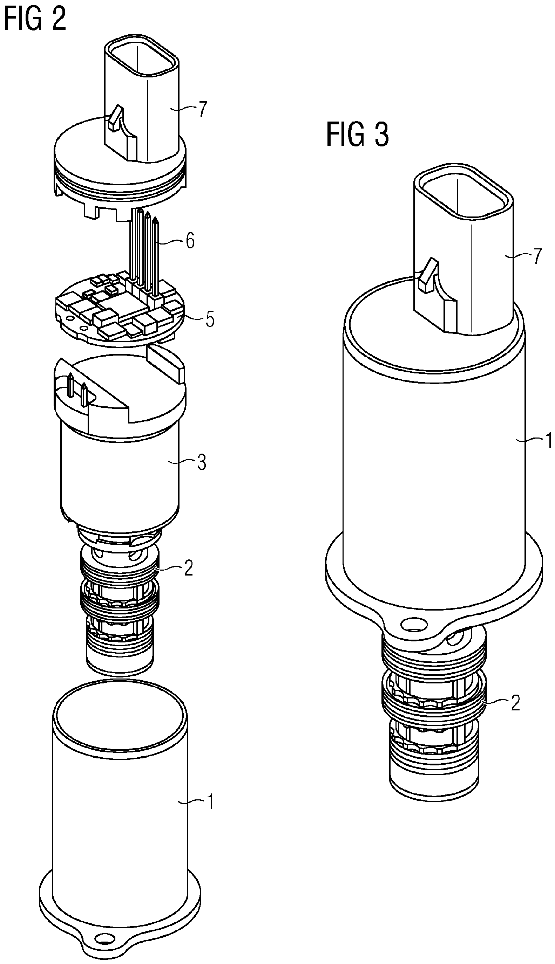

Fig. 2 eine Explosionszeichnung dazu und
Fig.3 das Ventil im montierten Zustand.

Das erfindungsgemäße Proportionalventil umfasst neben den herkömmlichen Bestandteilen wie Ventilgehäuse 1, Ventilkolben 2, Spulenkörper 3, Spulenkern 4 auch eine Elektronische Schaltung 5, sowie einen Stecker 6 mit Steckergehäuse 7. Mittels der in das Spulengehäuse integrierten elektronischen Schaltung 5 erfolgt die Ansteuerung des Proportionalventiles.

Diese Ansteuerung erfolgt mittels eines Elektromagneten der einen Spulenkörper 3 und einen Spulenkern 4 umfasst.

Die elektronische Schaltung 5 umfasst übliche Kontroll-, Steuer-, Speicher- und Schaltlogik wie beispielsweise einen handelsüblichen Mikroprozessor mit üblicher Beschaltung, eine CAN-Bus kompatible Busschnittstelle, sowie elektronische Leistungsschalter. Diese sind als H- Brücke ausgeführt um ein schnelles Abmagnetisieren zu ermöglichen.

Der CAN-Bus (Controller Area Network - Bus) ist ein serielles Bussystem, das die Kabelbäume in Fahrzeugen (bis zu 2 km) reduzieren und damit Gewicht sparen soll. CAN ist als ISO 11898 international standardisiert.

Durch die Integration der elektronischen Schaltung 5 in das Ventilgehäuse 1 können nun alle Justiervorgänge während des Herstellprozesses, wie die individuelle Festlegung des dithers, oder die Trimmung der Steuerkennlinie elektronisch durchgeführt und elektronisch im Ventil gespeichert werden.

Im Betrieb kann dann durch einen Temperatursensor der elektronischen Schaltung 5 eine Temperaturmessung innerhalb des Ventilgehäuses 1 erfolgen und auf deren Basis eine genaue Kompensation der Temperaturabhängigkeit erfolgen.

Zweckmäßig ist es überdies, wenn der tatsächlich vorhandene dither, der sogenannte dither-Hub gemessen wird, da sich dieser über die Lebensdauer des Ventils verändern kann und daher gegebenenfalls angepasst werden muss.

Die Messung des dither-Hubes kann beispielsweise magnetisch mittels Hallsensoren oder akustisch mittels Körperschallmikrofonen erfolgen, die ebenfalls in die elektronische Schaltung 5 integriert sein können.

Mit der erfindungsgemäßen Lösung werden die Aufwände für die Endjustierung des Ventils und die Entwicklungsaufwände für Getriebe erheblich reduziert.

Die erfindungsgemäßen Proportionalventile können direkt über CAN- Bus oder ein anderes vergleichbares Bussystem angesteuert werden, sodass der Aufwand im zugehörigen Getriebesteuergerät reduziert werden kann.

Bei einfachen Getrieben kann auf Getriebesteuergeräte vollends verzichtet werden, da ihre gesamte Funktionalität von der elektronischen Schaltung 5 des Proportionalventils übernommen wird.

Durch die laufende Überwachung des dither-Hubes behält das Proportionalventil über seine gesamte Lebensdauer seine volle Funktionalität.

### Bezugszeichenliste

- 1: Ventilgehäuse
- 2: Ventilkolben
- 3: Spulenkörper
- 4: Spulenkern
- 5: Elektronische Schaltung
- 6: Stecker
- 7: Steckergehäuse

## Patentansprüche

1. Elektromagnetisch gesteuertes Proportionalventil, welches Ventilgehäuse (1), Ventilkolben (2), Spulenkörper (3), und Spulenkern (4) umfasst, **dadurch gekennzeichnet, dass** eine Elektronische Schaltung (5) zur Speicherung von Justiervorgängen und zur Ansteuerung des Proportionalventils in das Ventilgehäuse (1) integriert ist, und dass ein Stecker (6) mit Steckergehäuse (7) vorgesehen ist.

2. Proportionalventil nach Anspruch 1, **dadurch gekennzeichnet, dass** der Stecker (6) zur Verbindung mit einem CAN-Bus System ausgelegt ist.

3. Proportionalventil nach Anspruch 1 oder 2, **dadurch gekennzeichnet, dass** die elektronische Schaltung (5) einen Temperatursensor umfasst.

4. Proportionalventil nach Anspruch 1 oder 2, **dadurch gekennzeichnet, dass** die elektronische Schaltung (5) Hallsensoren und/oder Körperschallmikrofone umfasst.

5. Einsatz eines elektromagnetisch gesteuertes Proportionalventil nach einem der Ansprüche 1 bis 4, **dadurch gekennzeichnet, dass** die elektronische Schaltung (5) des Proportionalventils die vollständige Funktionalität einer Allradsteuerung erfüllt.

## Claims

1. Electromagnetically controlled proportional valve which comprises a valve housing (1), a valve piston (2), a coil former (3) and a coil core (4), **characterized in that** an electronic circuit (5) for storing adjusting processes and for actuating the proportional valve is integrated into the valve housing (1), and **in that** a plug (6) with a plug housing (7) is provided.

2. Proportional valve according to Claim 1, **characterized in that** the plug (6) is designed for connection to a CAN bus system.

3. Proportional valve according to Claim 1 or 2, **characterized in that** the electronic circuit (5) comprises a temperature sensor.

4. Proportional valve according to Claim 1 or 2, **characterized in that** the electronic circuit (5) comprises Hall sensors and/or structure-borne sound microphones.

5. Use of an electromagnetically controlled proportional valve according to one of Claims 1 to 4, **characterized in that** the electronic circuit (5) of the proportional valve fulfils the entire functionality of an all-wheel controller.

## Revendications

1. Vanne proportionnelle commandée par électro-aimant comportant un corps de vanne (1), un piston de vanne (2), un corps de bobine (3) et un noyau de bobine (4), **caractérisée en ce qu'**un circuit électronique (5) pour le stockage des processus d'ajustage et pour commander la vanne proportionnelle est incorporé au corps de vanne (1) et qu'un contact (6) comportant un corps de contact (7) est prévu.

2. Vanne proportionnelle selon la revendication 1, **caractérisée en ce que** le contact (6) est conçu pour être relié à un système à bus CAN.

3. Vanne proportionnelle selon la revendication 1 ou 2, **caractérisée en ce que** le circuit électronique (5) comprend un capteur de température.

4. Vanne proportionnelle selon la revendication 1 ou 2, **caractérisée en ce que** le circuit électronique (5) comporte des capteurs Hall et/ou des microphones de bruit de structure.

5. Mise en œuvre d'une vanne proportionnelle commandée par électro-aimant selon l'une des revendications 1 à 4, **caractérisée en ce que** le circuit électronique (5) de la vanne proportionnelle assure la fonctionnalité intégrale d'un système de commande des quatre roues motrices.
